Europäisches Patentamt

European Patent Office

Office européen des brevets

(19)

(11) Numéro de publication : **0 011 016**
**B1**

(12) # FASCICULE DE BREVET EUROPÉEN

(45) Date de publication du fascicule du brevet :
01.06.83

(51) Int. Cl.³ : **H 04 N   5/91**

(21) Numéro de dépôt : **79400773.2**

(22) Date de dépôt : **19.10.79**

(54) **Système de diffusion de signaux audio-visuels de télévision synchronisés par une fréquence pilote et procédé de mise en œuvre.**

(30) Priorité : **31.10.78 FR 7830851**

(43) Date de publication de la demande :
**14.05.80 Bulletin 80/10**

(45) Mention de la délivrance du brevet :
**01.06.83 Bulletin 83/22**

(84) Etats contractants désignés :
**DE GB IT NL SE**

(56) Documents cités :
**FR A 1 354 910**
**FR A 2 113 933**
**FR A 2 277 484**
**FR A 2 383 562**
**US A 2 828 478**

(73) Titulaire : **THOMSON-BRANDT**
**173, Boulevard Haussmann**
**F-75379 Paris Cedex 08 (FR)**

(72) Inventeur : **Romeas, René**
**«THOMPSON-CSF» - SCPI 173, Bld Haussmann**
**F-75360 Paris Cedex 08 (FR)**

(74) Mandataire : **Lepercque, Jean et al**
**THOMSON-CSF SCPI 173, Bld Haussmann**
**F-75379 Paris Cedex 08 (FR)**

Jouve, 18, rue St-Denis, 75001 Paris, France

# Système de diffusion de signaux audio-visuels de télévision synchronisés par une fréquence pilote et procédé de mise en œuvre

L'invention se rapporte aux systèmes de diffusion de signaux audio-visuels de télévision et en particulier à un système de diffusion comportant des supports d'enregistrement pour signaux de télévision couleur, tels que disques ou bandes à lecture optique ou magnétique.

Il est bien connu d'enregistrer sur de tels supports des signaux de télévision qui comportent habituellement une composante vidéo et une composante sonore. Un signal vidéo couleur comprend pour sa part un signal de luminance et un signal de chrominance. Ces différentes composantes sont ensuite combinées et modulent, par exemple en fréquence, une porteuse qui à son tour peut, selon un procédé avantageux, être codée en une suite d'impulsions modulées en durée. Ces impulsions sont ensuite enregistrées sur un support par tous moyens appropriés. D'autres procédés sont envisageables, mais lors de la lecture des signaux ainsi enregistrés, il est nécessaire dans tous les cas de disposer de signaux de synchronisation de lignes et de trames pour que les signaux d'image puissent être reproduits sur un écran.

Il est d'usage, dans l'art antérieur, de multiplexer des signaux impulsionnels de synchronisation normalisés avec le signal vidéo de luminance. Ce multiplexage se fait, dans un premier temps, habituellement en amplitude pendant les intervalles de temps de retour de ligne et de trame, et le signal composite ainsi obtenu sert, après combinaison avec le signal vidéo de chrominance, à moduler, par exemple en fréquence, une porteuse selon le procédé qui a été exposé précédemment. Dans le cas particulier de la télévision noir et blanc le signal vidéo de chrominance est absent.

Ce procédé, bien qu'universellement utilisé, présente des inconvénients. En premier lieu, toute l'amplitude disponible de modulation du signal vidéo ne peut être utilisée puisqu'il faut réserver une partie de cette amplitude (30 % selon la norme de télévision française) pour le multiplexage des signaux de synchronisation. Cette synchronisation s'effectuant sur les transitions des signaux impulsionnels de synchronisation, une détérioration des flancs de ces signaux ou la superposition de signaux parasites peuvent entraîner des défauts de synchronisation. La perte du code image en lecture entraîne également des sautes d'image en reproduction. Enfin il est à remarquer, sans que la liste des inconvénients cités soit exhaustive, que les intervalles de retour de ligne ou de suppression de trame occupés par des signaux de synchronisation ne sont pas complètement utilisables à d'autres fins.

Il est par ailleurs connu, par exemple d'après l'enseignement des demandes de brevets français FR-A-2 113 933 (PHILIPS) et FR-A-2 383 562 (VICTOR) d'introduire en lieu et place des signaux conventionnels de synchronisation que l'on peut qualifier de types « analogiques » des signaux de types « binaires » consistant en des salves occupant tout ou partie les intervalles de retour ligne et de retour trame.

Bien que supprimant une partie des inconvénients qui viennent d'être rappelés, l'amélioration apportée est incomplète. Notamment, ces signaux occupant les intervalles de temps antérieurement réservés aux signaux de synchronisation conventionnels, ceux-ci ne peuvent être utilisés à d'autres fins.

Pour pallier ces inconvénients, l'invention propose d'utiliser à la place des signaux de synchronisation habituels ou des signaux de type binaire en faisant fonction, un signal pilote continu sinusoïdal. Ce procédé ne nécessite aucun moyen supplémentaire coûteux. Il est en effet aisé de produire un signal sinusoïdal de fréquence pure et de le combiner par addition à la fréquence porteuse. On peut d'ailleurs dans certains cas utiliser des signaux existants. Au cours du processus de lecture, une simple opération de filtrage permet de séparer ce signal pilote des signaux de télévision habituels. Il est ensuite utilisé pour reconstituer les signaux de synchronisation habituels et éventuellement pour piloter d'autres bases de temps électronique et/ou électromécanique. En particulier, selon un aspect avantageux de l'invention, on peut utiliser ce signal pilote régénéré pour réguler la vitesse de défilement du support d'enregistrement puisque ce signal continûment enregistré subit les mêmes fluctuations que celles du support. Enfin, les intervalles de retour de ligne et d'image, laissés libres peuvent être utilisés pour l'enregistrement, entrelacés avec les signaux vidéo, d'informations numériques ou analogiques.

L'invention a donc pour objet un système de diffusion de signaux audio-visuels représentant des images de télévision organisées en trames divisées en lignes de balayage utilisant une onde multiplex composée d'une suite d'impulsions modulées en durée pouvant être transcrites sur une piste portée par un support d'information ; les signaux audio-visuels comprenant un signal vidéo ; caractérisé en ce qu'il comprend une section d'enregistrement comportant :

— des premiers circuits pour générer un signal pilote continu sinusoïdal de fréquence multiple de la demi-fréquence de balayage desdites lignes ;

— des deuxièmes circuits pour générer un train unique de bits et pour enregistrer ce train dans un des intervalles de suppression trame de chaque image de manière à marquer le début de chacune desdites images dudit signal vidéo ;

— des troisièmes circuits à modulation de fréquence produisant une porteuse modulée par le signal vidéo ;

— des quatrièmes circuits combinant la porteuse modulée par le signal vidéo avec le signal pilote continu sinusoïdal composite ;

— et des cinquièmes circuits pour la modulation en durée et l'écrêtage de ce signal composite ;

et une section de lecture comportant :

— des circuits de filtrage pour extraire le signal pilote continu sinusoïdal du signal lu ;

— et des circuits pour régénérer à partir du signal pilote extrait des signaux impulsionnels de synchronisation utilisés dans un système de télévision classique.

L'invention concerne également un procédé de codage et de décodage d'un signal de télévision selon la revendication 9.

L'invention sera mieux comprise et d'autres avantages apparaîtront à la lecture de la description ci-après d'une réalisation préférée d'un système de diffusion de signaux audio-visuels selon l'invention et à l'examen des figures annexées parmi lesquelles :

la figure 1 représente un codeur de signaux de télévision couleur de l'art antérieur ;

la figure 2 est un exemple de signal vidéo de luminance codé selon l'art antérieur ;

la figure 3 représente le même signal codé selon un aspect de l'invention ;

la figure 4 est un diagramme explicatif de la technique de modulation et d'échantillonnage mise en œuvre ;

la figure 5 représente un agencement des fréquences du signal codé et enregistré ;

la figure 6 représente un codeur de signaux de télévision couleur codés selon l'invention ;

la figure 7 représente un décodeur de signaux de télévision couleur codés selon l'invention.

Dans ce qui suit, les traitements des signaux autres que celui du signal pilote de fréquence pure, qui seul entre dans le cadre de l'invention, ne seront explicités que s'ils permettent une meilleure compréhension de l'invention. En particulier, ne seront pas décrits les moyens de transcription sur le support d'enregistrement, du type vidéo-disque dans la réalisation préférée de l'invention. De même ne sera pas décrit le traitement de la composante sonore des signaux de télévision. Toutes ces techniques ont été amplement exposées dans l'art antérieur.

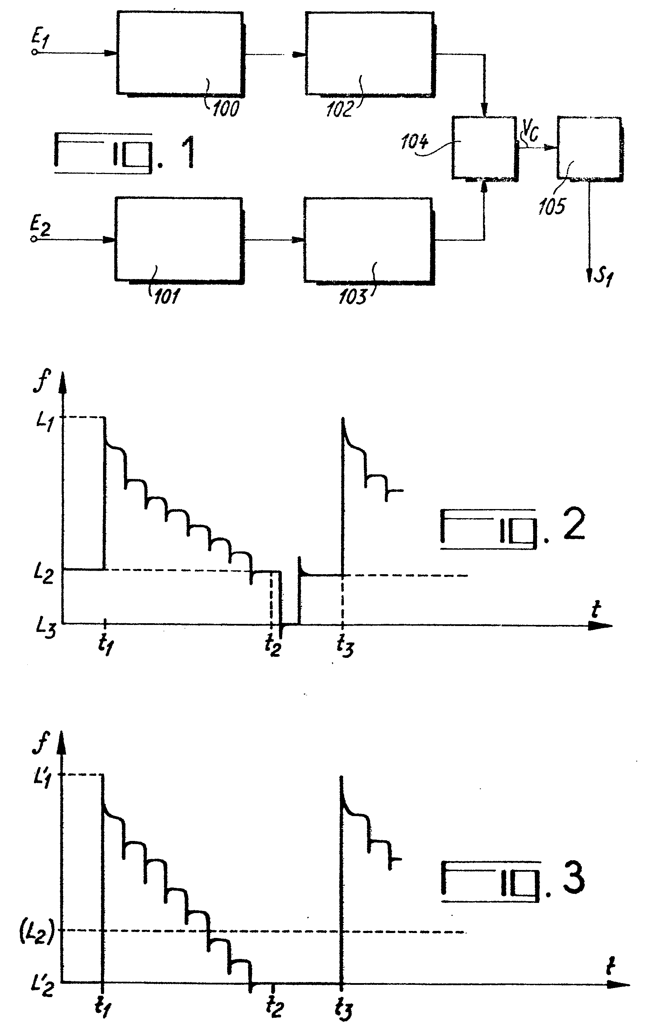

Il est cependant utile de rappeler quelques données concernant les signaux évoqués ci-dessus. Dans un codeur de signaux de télévision couleur selon l'art antérieur représenté sur la figure 1, deux signaux (en plus du signal son non représenté) sont à transmettre :

— le signal de luminance $E'_y$ qui est obtenu par matriçage des trois couleurs primaires ($E'_V$, $E'_R$, $E'_B$) tel que $E'_y = 0,59\ E'_V + 0,30\ E'_R + 0,11\ E'_B$.

La manière de traiter les signaux pour obtenir $E'_y$ est connue de l'homme de métier.

Ce signal est transmis avec des signaux de synchronisation comme il le sera décrit ultérieurement.

Le signal de chrominance qui est voisin du signal de chrominance de la norme française de télévision en couleur SECAM et comprend les signaux :

$D'_R = E'_R - E'_y$ et $D'_B = E'_B - E'_y$ qui sont transmis séquentiellement de ligne à ligne.

Les signaux de luminance et de chrominance sont modulés et multiplexés de façon décrite ci-dessous. Les valeurs de fréquences sont données à titre d'exemple de réalisation non limitatif, ce en relation non seulement avec la figure 1, mais aussi avec les autres figures décrites ultérieurement.

Le signal de luminance ($E'_y$) est transmis sur une fréquence porteuse modulée en fréquence. Ce signal, qui est élaboré de façon connue, est ensuite préaccentué suivant une loi qui est sensiblement la même que celle utilisée dans la plupart des magnétoscopes professionnels. Cette loi étant sans intérêt pour la présente invention n'est pas reproduite ici. Le signal $E'_y$ préaccentué est représenté, figure 2 (cas d'une mire de barre couleur 75 %). Il est à remarquer que l'amplitude utile de variation de fréquence, c'est-à-dire représentant le signal de luminance, est illustrée par le seul segment $L_1$-$L_2$ de l'axe F. Le signal de luminance est présent pendant l'intervalle de temps $t_1$-$t_2$, l'intervalle $t_2$-$t_3$ représente le temps nécessaire au retour de ligne. Pendant cet intervalle, sont insérés les signaux de synchronisation de ligne nécessitant un balayage de fréquence : segment $L_2$-$L_3$. De façon analogue, pendant les intervalles de suppression de trame, non représentés, sont insérés les signaux de synchronisation de trame.

Ce signal $E'_y$ préaccentué module en fréquence une porteuse sinusoïdale. L'excursion de fréquence est de 1,5 MHz pour le signal d'amplitude maximum, à laquelle il faut ajouter l'excursion supplémentaire due aux pointes de préaccentuation. L'excursion maximale : signal + pointes de préaccentuation, est limitée à 3 MHz crête à crête, par écrêtage des plus grandes pointes.

Il a été vu précédemment que le signal de chrominance est voisin de celui de la norme SECAM ; il se présente donc sous la forme :

$D'_R$ pendant les lignes n, n + 2, n + 4...

$D'_B$ pendant les lignes n + 1, n + 3, n + 5...

Ce signal qui a subi la loi de préaccentuation conforme au procédé SECAM, vient moduler en fréquence une onde sinusoïdale dont la fréquence centrale est à 3,6 MHz et la déviation maximale ± 400 KHz.

Cette onde modulée en fréquence est ensuite additionnée au signal de luminance $E'_y$ pour moduler avec elle l'oscillateur de porteuse principale vue précédemment. Cette onde est ensuite écrêtée et les signaux résultants modulés en durée selon un procédé connu.

La figure 1 décrit un schéma de principe du codeur réalisant les fonctions exposées ci-dessus. Le signal de luminance, comprenant les « tops » de synchronisation de lignes et de trames, est transmis à l'entrée $E_1$ d'un circuit de préaccentuation 100. Les signaux ainsi traités sont ensuite écrêtés par le circuit 102. De la même façon, les signaux séquentiels de chrominance transmis à l'entrée $E_2$ sont préaccentués en 101 et écrêtés en 103 pour être additionnés aux signaux de luminance dans le circuit 104. Le circuit 105 représente un modulateur de fréquence. Sur la sortie $S_1$ sera disponible la fréquence porteuse principale modulée en fréquence par le signal vidéo composite Vc.

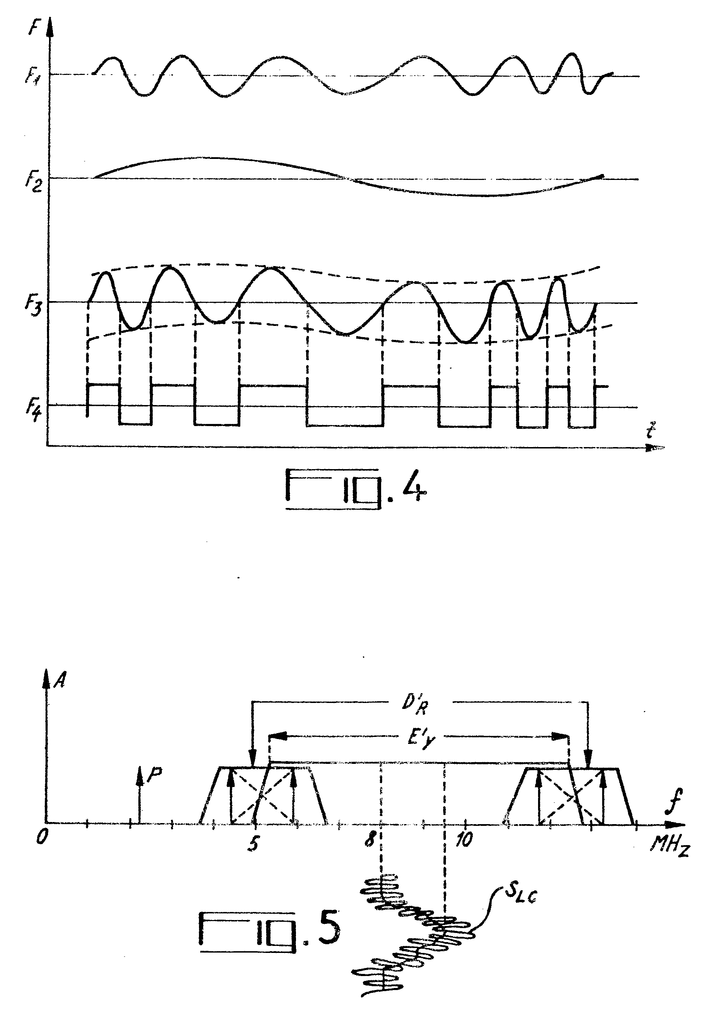

La figure 6 représente un codeur de signaux de télévision couleur selon l'invention. La chaîne des circuits 200 à 205 est identique à celle des circuits de la figure 1. Seul le signal de luminance présent sur l'entrée $E_1$ est différent, conformément à un des aspects de l'invention. En effet, il ne comporte pas de signaux normalisés de synchronisation. La figure 3 illustre un tel signal. Une comparaison avec la figure 2, les échelles de fréquence et de temps étant identiques, met en évidence une meilleure utilisation de la dynamique de modulation disponible au profit du seul signal de luminance.

Selon un autre aspect de l'invention, les signaux de synchronisation sont reconstitués en utilisant, pendant le processus de lecture, un signal pilote. Celui-ci doit donc être enregistré concurremment avec les signaux vidéo. Un tel signal, créé par tous moyens appropriés, par exemple un oscillateur à verrouillage de phase 210, est présent sur l'entrée P. Sa fréquence doit être un multiple exact de la demi-fréquence de balayage de ligne. Pour ce faire, il est utilisé des signaux de commande CDS en provenance d'un générateur de balayage de ligne non représenté.

La synchronisation n'étant pas transmise sous sa forme habituelle avec le signal de luminance $E'_y$, il est nécessaire, en plus de ce signal pilote, de transmettre un code qui permettra à la lecture de reconnaître le début de chaque image de télévision transmise. Ceci est obtenu en ajoutant au signal $E'_y$ un train unique d'impulsions codées BN pendant un des intervalles de suppression de trame (retour du balayage vertical) de chaque image. Ce signal se présente sous la forme d'un train binaire de n bits (24 dans l'exemple particulier de réalisation décrit ici). Ce train est modulé selon la technique dite de « Non retour à zéro » (N.R.Z.) est démodulé à la lecture en utilisant le pilote comme horloge. Il est créé par le module 211 en synchronisme avec des signaux de suppression de trame Bt, en provenance d'un générateur de balayage non représenté. Malgré la présence de ce code, la quasi-totalité de l'intervalle de suppression de trame et les intervalles de retour de ligne sont libérés de tous signaux de synchronisation. Ils peuvent être utilisés pour transmettre, multiplexés en temps avec les signaux vidéo, des informations numériques ou analogiques. En particulier la composante son peut être ainsi enregistrée, par exemple sous forme d'échantillons numériques. Il est alors inutile de créer une porteuse son. D'autres codes peuvent être transmis de cette façon : numéro d'image, signaux visuels à évolution lente etc... Ceci constitue un autre aspect avantageux de l'invention.

Il a été vu aux paragraphes précédents que le signal pilote est formé d'une onde sinusoïdale pure, sa fréquence est de 144 FL soit 2,25 MHz pour un standard à 625 lignes, 25 images/seconde (toujours dans l'exemple cité).

Cette onde est additionnée à la porteuse principale présente en $S_1$, telle que celle-ci sorte du modulateur suivant une loi :

$$K_1 \cdot A_{pAL} + K_2 A_p \text{ avec}$$
$A_{pAL}$ : amplitude de la porteuse principale
$A_p$ : amplitude du signal pilote

Les coefficients $K_1 = 0,8$ et $K_2 = 0,2$ peuvent être adaptés aux conditions d'enregistrement et de lecture de manière à obtenir les meilleurs compromis signal/bruit porteuse, signal/bruit pilote et intermodulation. Ces opérations sont réalisées par les circuits 206 et 207. Après addition en 208 le signal résultant est écrêté en 209 de manière à former un train d'impulsions de largeurs variables représentant les passages par zéro du signal résultant. Les étapes de ces opérations sont résumées sur le diagramme des temps de la figure 4. La ligne $F_1$ représente la porteuse principale modulée en fréquence, disponible sur la sortie $S_1$. La ligne $F_2$ le signal pilote de fréquence fixe, la ligne $F_3$ la combinaison des deux signaux précédents après pondération selon la loi évoquée ci-dessus et la ligne $F_4$ le signal sur la sortie $S_2$ du codeur selon l'invention.

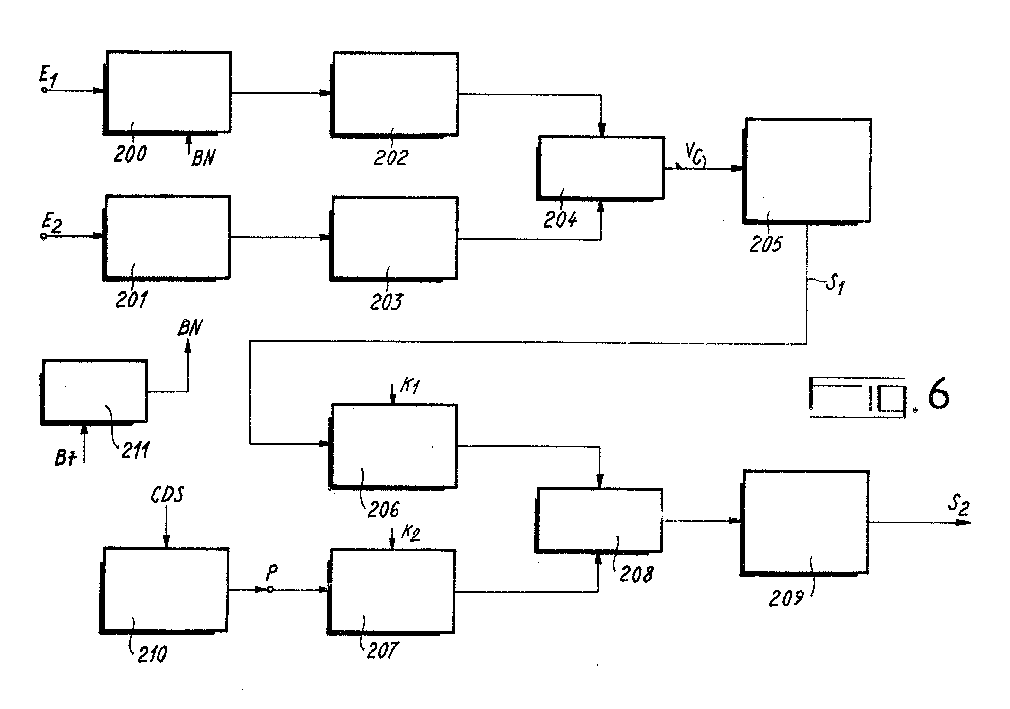

Le spectre des fréquences qu'occupe un tel système de modulation est représenté sur la figure 5. A titre purement indicatif, le signal vidéo de luminance préaccentué module en fréquence une porteuse sinusoïdale dont les fréquences instantanées se situent à 8 MHz pour le niveau du noir et 9,5 MHz pour le niveau du blanc maximum. L'excursion de fréquence maximum, y compris les pointes de préaccentuation est, comme précédemment indiqué, de 3 MHz crête à crête. Le signal vidéo de chrominance reste inchangé par rapport à l'art antérieur. La fréquence pilote est indiquée sur la figure 5 par la lettre P. Le signal composite « luminance + chrominance » porte la référence $S_{LC}$.

Ce procédé de modulation est connu et décrit dans le brevet français n° 2 272 562, délivré au nom de la demanderesse.

Les opérations d'enregistrement et de lecture sur/et à partir d'un support mobile du type vidéo-disque ne seront pas décrites, le procédé selon l'invention restant compatible avec les techniques connues antérieurement.

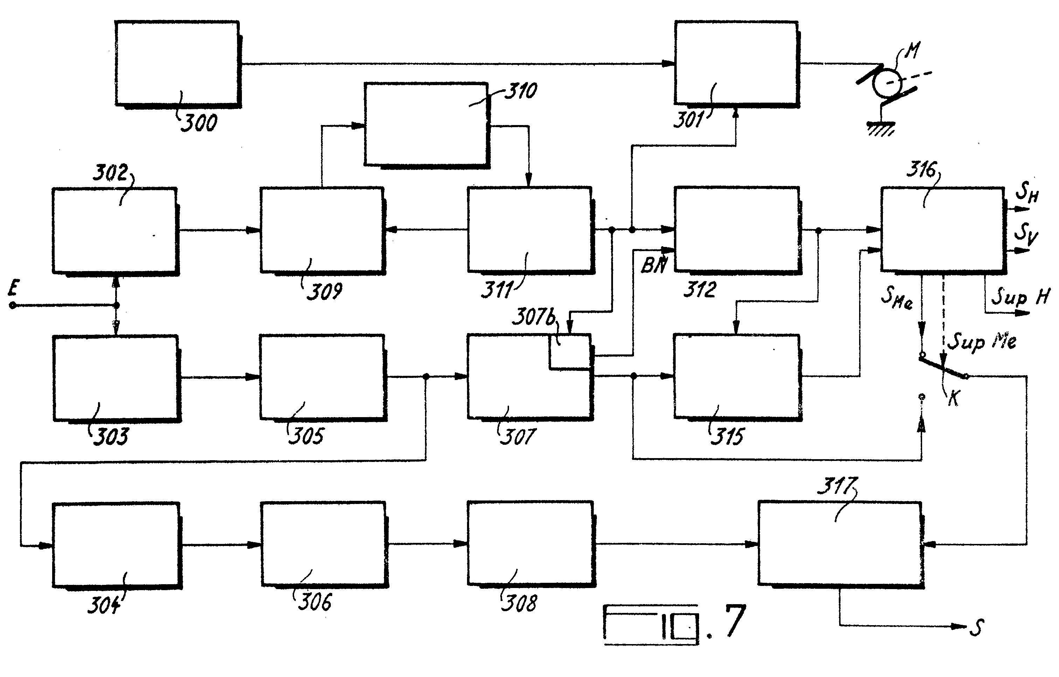

La figure 7 décrit un décodeur de signaux de télévision couleur codés selon le procédé de l'invention. Le signal HF provenant d'organes de lecture (non représentés), dont le spectre est indiqué sur la figure 5, est transmis par l'entrée E d'une part à un filtre passe-bande 3-14 MHz : 303 laissant passer le spectre des signaux luminance et chrominance autour de la porteuse principale, d'autre part à un filtre passe-bande 302 centré sur la fréquence 2,25 MHz ± 200 KHz, laissant passer le pilote. Les circuits de démodulation voie y et chrominance, les modulateurs NTSC, PAL ou SECAM appartenant à l'art connu.ne seront pas décrits.

Seuls seront décrits les traitements sur le pilote et la reconstitution des signaux de synchronisation qui constituent l'originalité de l'invention.

Après filtrage 302 le signal pilote provenant de la lecture est régénéré dans une boucle à verrouillage de phase classique composée d'un oscillateur à contrôle par tension 311, d'un comparateur de phase 309 et d'un filtre de boucle 310. La fréquence de l'oscillateur 311 est verrouillée sur celle du pilote, la constante de temps de la boucle est calculée de façon à ce que les erreurs de lecture provoquant des pertes du signal pilote de courte durée (inférieures à 2 lignes de télévision) ne produisent pas de perturbation sur le signal de synchronisation. Cette constante de temps ne doit cependant pas être trop longue de manière à ne pas masquer les fluctuations rapides de vitesse de défilement du support d'enregistrement, ces fluctuations devant être corrigées ensuite par le circuit de contrôle de la vitesse de défilement 301 commandé par la sortie de l'oscillateur 311 verrouillé sur le pilote. Dans la pratique cette constante de temps est fixée à une dizaine de lignes.

La fréquence du pilote, et donc de l'oscillateur 311, étant dans l'exemple de réalisation de 144 FL (FL étant la fréquence ligne), il suffit dans le générateur de synchronisation 316 de diviser cette fréquence par 144 pour retrouver la fréquence de ligne et ensuite par 50 ou 60 selon les cas, pour retrouver la fréquence de trame (sorties SH et SV).

A la sortie de l'oscillateur 311 la fréquence pilote régénérée est transmise à un circuit 312 destiné à compenser les différences de temps de propagation entre la voie transmettant les signaux de luminance $E'_y$ et la voie transmettant cette fréquence pilote. La remise en phase des signaux se fait de manière à ce que chaque transition montante du signal pilote régénéré corresponde au milieu d'un bit du train binaire BN de début d'image transmis avec le signal de vidéo de luminance. De cette manière le signal pilote régénéré peut être utilisé comme horloge dans le démodulateur de synchronisation image 315 pour démoduler le train binaire. On dispose ainsi à la sortie du démodulateur 315 d'une impulsion destinée à remettre en phase le générateur de synchronisation 316 avec le signal de vidéo, cette remise en phase s'effectue par la remise à zéro du générateur de synchronisation au début de chaque image (début de ligne n° 1). Il est à noter que, bien qu'effectuée à chaque image, cette remise à zéro n'est nécessaire qu'une fois au début de la lecture, le générateur de synchronisation 316 commandé par le pilote régénéré ne peut ensuite plus se décaler tant que la lecture n'est pas interrompue pendant une période excédant la durée de deux à trois lignes. Ceci est très intéressant car le système sera insensible aux absences de remise à zéro dues à des erreurs de lecture sur le train binaire. Cette particularité constitue une des caractéristiques les plus importantes de l'invention.

Un autre caractéristique importante est la suivante : le signal de synchronisation ainsi reconstitué dans le générateur de synchronisation 316 se présente exempt de tout bruit de fond, signal erroné ou transition abîmée de signaux impulsionnels ; ce qui ne serait le cas si on l'avait transmis de façon classique avec le signal de luminance. Il s'ensuit un fonctionnement bien meilleur des moniteurs ou autres appareils devant utiliser ce signal.

Le signal pilote peut encore être utilisé pour contrôler la vitesse de défilement du support d'enregistrement. Il s'agit là d'un autre aspect avantageux de l'invention. Dans le cas du vidéodisque, il faut contrôler la vitesse circonférentielle de défilement de la piste enregistrée par rapport à la tête de lecture optique. Ce contrôle est effectué par un dispositif 301 bouclé qui reçoit d'une part la fréquence Horloge venant d'un oscillateur à quartz 300 et d'autre part le pilote régénéré. La comparaison effectuée entre la phase de l'horloge qui est la référence et celle du pilote régénéré qui dépend de la vitesse de défilement de la piste, produit un signal d'erreur qui, une fois amplifié, corrige la vitesse de rotation du moteur M d'entraînement du disque.

Ce système utilisant le pilote régénéré permet, du fait de l'absence de signaux erronés et de la fréquence de comparaison beaucoup plus élevée, d'obtenir un gain du servomécanisme de contrôle de vitesse beaucoup plus important qu'avec le système classique utilisant le signal de synchronisation transmis sur la luminance. A titre d'exemple dans un système expérimental réalisé en accord avec l'invention, le gain du servomécanisme est passé de 20 décibels avec le système classique à 34 décibels avec le système décrit, à la fréquence de 25 Hz.

Un cas particulier à considérer est le cas d'un déplacement rapide de la tête de lecture (recherche d'images, accès rapide à un numéro demandé). L'expérience a montré que les salves du signal HF lues sur chaque piste traversée, sont suffisantes pour maintenir verrouillée la boucle du pilote régénéré et donc, par là même, le signal de synchronisation ainsi que l'asservissement de vitesse de défilement des pistes. Le procédé de l'invention permet un fonctionnement correct, sans qu'il soit nécessaire d'adopter des mesures spéciales.

L'utilisation du signal pilote n'est pas limité aux aspects fondamentaux de l'invention qui viennent d'être décrits. On a vu que le pilote régénéré constituait une horloge sûre dont la phase était intimement liée à celle des autres signaux enregistrés sur le support.

Cette qualité permet de l'utiliser pour démoduler d'autres signaux. Par exemple pour la démodulation d'un signal de chrominance qui serait enregistré soit en modulation d'amplitude à porteuse supprimée et signaux de chrominance séquentiels ligne à ligne, soit en modulation à porteuse supprimée de type PAL ou NTSC, la démodulation classique à l'aide de salves n'étant pas possible dans ce cas à cause des fluctuations résiduelles rapides de la vitesse de défilement.

Un autre exemple serait la démodulation de trains binaires supplémentaires disposés dans les intervalles de suppression de ligne et trame du signal de luminance entièrement libérés par l'absence des signaux de synchronisation classique. Ce pourrait être le cas par exemple pour une ou plusieurs voies son numériques, des numéros d'image, ou d'autres codes contenant des informations diverses (textes, chargement des mémoires d'un microprocesseur de gestion du lecteur, etc...), ainsi qu'il a été déjà mentionné. Le débit binaire est égal à deux fois la fréquence du pilote soit, dans l'exemple choisi, 4,5 M bits/S.

Le pilote peut aussi être utilisé pour la mise en œuvre d'un correcteur de base de temps électromécanique ou électronique. En effet, la fréquence du pilote à la lecture fluctuant au même rythme que les variations de vitesse du support d'enregistrement, on peut détecter ces fluctuations et par suite les corriger, en comparant le pilote à un oscillateur stable de même fréquence.

Enfin, on peut également utiliser le pilote comme horloge pour entrer les informations lues dans une mémoire tampon, ces informations étant ensuite sorties de la mémoire par l'oscillateur stable.

Il faut cependant remarquer que quelques précautions élémentaires doivent être prises quant au choix de la fréquence pilote.

On sait que dans tout système d'enregistrement les imperfections de gravure, lecture ou autre, vont faire apparaître des termes d'intermodulation, en particulier la fréquence du pilote peut apparaître dans la bande du signal de luminance démodulé. Du fait de son synchronisme avec l'image, cette fréquence apparaîtra comme des barres verticales sur l'image. Bien que leur niveau soit très faible, ces barres peuvent être visibles, voir gênantes, lorsque la lecture s'effectue dans des conditions médiocres. Pour éviter cette gêne, il convient donc d'entrelacer ces barres, ceci peut être obtenu de deux façons :

— Entrelacement à fréquence ligne : c'est la solution qui apporte la meilleure protection. La fréquence du pilote doit être un multiple impair de la 1/2 fréquence de ligne, de cette façon le pilote et donc le signal parasite d'intermodulation également, se présenteront en opposition de phase d'une ligne à la suivante évitant ainsi la formation de barres sur l'écran.

— Entrelacement à fréquence de trame : la phase du pilote est inversée à chaque trame ce qui produit le même effet visuel que précédemment, il semble cependant que la protection soit un peu moins bonne pour les forts taux d'intermodulation. Cette disposition permet par contre de protéger le code de début d'image, c'est-à-dire dans le cas présent le train de 24 bits codés en binaire contre les cas, bien improbables mais existants toutefois, où ce code serait contenu dans un signal vidéo de l'image.

Pour mettre en œuvre cette protection, il faut que l'inversion de phase du pilote se produise juste au début du train binaire composant le code de début d'image. La détection par des moyens simples à la lecture de l'inversion de phase du pilote, en comparant par exemple la phase du pilote régénéré en sortie de l'oscillateur 311 avec celle du pilote venant de la lecture permet d'ouvrir une porte juste pendant le temps nécessaire au passage de l'impulsion de remise à zéro du générateur de synchronisation, fournie par le démodulateur de synchronisation image 315.

Le générateur de synchronisation 316 fournit les signaux suivants :

— Synchronisation de ligne : SH — Suppression ligne : Sup H

— Synchronisation de trame : SV — Suppression Mélangée : Sup Me

— Synchronisation Mélangée : SMe

Le signal de luminance sortant de la chaîne de démodulation après filtrage, se présente sous la forme décrite figure 3, c'est-à-dire sans signaux de synchronisation.

Il convient, pour rendre le signal exploitable sur la plupart des moniteurs, de lui additionner le signal de synchronisation mélangée sortant du générateur de synchronisation 316. Cette opération est effectuée au moyen du commutateur électronique K commandé par le signal de suppression mélangé : Sup Me. Durant les périodes visibles du balayage, le commutateur laisse passer seulement le signal de luminance et, durant les périodes invisibles (suppression H et suppression V) correspondant aux retours des balayages de lignes et de trames, il laisse passer seulement le signal de synchronisation. Les niveaux respectifs des signaux de luminance et de synchronisation auront été préalablement réglés de façon convenable.

Après addition de ces signaux, le signal vidéo formé pourra attaquer, avec le signal de chrominance venant du démodulateur chrominance 306, un modulateur 317 qui est selon les cas un modulateur SECAM, PAL, ou NTSC, de tous types connus.

Pour une bonne compréhension de la figure 7, on peut indiquer rapidement que le module 305 est un démodulateur de luminance, le module 304 un filtre passe-bande centré autour de 3,6 MHz qui attaque un démodulateur de chrominance 306. Les deux modules 307 et 308 sont, pour leur part, des unités de désaccentuation et filtrage, respectivement pour les signaux vidéo de luminance et de chrominance. Toutes ces fonctions sont communes avec l'art connu.

Le module 307 contient de plus un discriminateur 307b pour isoler le train de 24 bits codés en binaire. On utilise pour ce faire le signal pilote comme signal d'horloge.

L'invention n'est pas limitée à la réalisation qui vient d'être décrite. Il est également possible d'utiliser tout ou partie de ce système de codage, pour l'enregistrement de signaux de télévision sur d'autres supports que le vidéo-disque (bandes magnétiques par exemple) ou pour toute autre utilisation, sans sortir du cadre de l'invention.

Il est notamment à signaler qu'un enregistrement codé selon le procédé de l'invention peut rester compatible, en lecture, avec un système de diffusion de l'art antérieur. Il faut pour ce faire, renoncer à certains avantages de l'invention car les signaux standards de synchronisation devront être conservés sur l'enregistrement, en plus du signal pilote. Ceci a pour conséquence que la composante son ne peut plus être enregistrée dans les intervalles de retour de ligne et de suppression de trame. Il est évident également que, mise à part la compatibilité conservée, le codage selon le procédé de l'invention n'apporte aucune amélioration lorsque l'enregistrement est lu par un décodeur de l'art antérieur ; seule l'utilisation du signal pilote, fondement de l'invention, permet les améliorations signalées antérieurement. Cette possibilité peut cependant sembler intéressante pour certaines applications commerciales.

**Revendications**

1. Système de diffusion de signaux audio-visuels représentant des images de télévision organisées en trames divisées en lignes de balayage utilisant une onde multiplex composée d'une suite d'impulsions modulées en durée pouvant être transcrites sur une piste portée par un support d'information ; les signaux audio-visuels comprenant un signal vidéo ; caractérisé en ce qu'il comprend une section d'enregistrement comportant :
— des premiers circuits (210) pour générer un signal pilote continu sinusoïdal de fréquence multiple de la demi-fréquence de balayage desdites lignes ;
— des deuxièmes circuits (211, 200) pour générer un train unique de bits et pour enregistrer ce train dans un des intervalles de suppression trame de chaque image dudit signal vidéo, de manière à marquer le début de chacune desdites images ;
— des troisièmes circuits (205) à modulation de fréquence produisant une porteuse modulée par le signal vidéo ;
— des quatrièmes circuits (206-208) combinant la porteuse modulée par le signal vidéo avec le signal pilote continu sinusoïdal pour la génération d'un signal composite ;
— et des cinquièmes circuits (209) pour la modulation en durée et l'écrêtage de ce signal composite ;
et une section de lecture comportant :
— des circuits de filtrage (302) pour extraire le signal pilote continu sinusoïdal du signal lu ;
— et des circuits (316) pour régénérer à partir du signal pilote extrait des signaux impulsionnels de synchronisations utilisés dans un système de télévision classique.

2. Système selon la revendication 1 caractérisé en ce que les premiers circuits génèrent un signal sinusoïdal de fréquence égale à un multiple impair de la demi-fréquence de balayage de ligne de manière à ce que la phase du signal pilote soit inversée d'une ligne de balayage à la suivante.

3. Système selon la revendication 1, caractérisé en ce que, les signaux vidéo étant exempts de signaux normalisés de synchronisation, il comprend des moyens pour enregistrer des signaux d'information numériques ou analogiques pendant des intervalles correspondant aux retours de ligne.

4. Système selon la revendication 1, caractérisé en ce que la section de lecture comprend en outre un oscillateur à verrouillage de phase (309-312) commandé par le signal pilote et dont la fréquence de sortie est utilisée comme référence par les circuits (316) de génération de signaux de synchronisation.

5. Système selon la revendication 4, caractérisé en ce que l'oscillateur à verrouillage de phase (309-312) a une constante de temps déterminée de façon à le rendre insensible à des altérations de courte durée du signal pilote.

6. Système selon la revendication 1, caractérisé en ce que la section de lecture comprend en outre des bases de temps électromécaniques ou électroniques synchronisées par le signal pilote.

7. Système selon l'une quelconque des revendications 1 à 6, caractérisé en ce qu'il comprend des moyens de lecture des signaux audio-visuels enregistrés utilisant des capteurs optiques.

8. Système selon l'une quelconque des revendications 1 à 6, caractérisé en ce qu'il comprend des moyens de lecture des signaux audio-visuels enregistrés utilisant des capteurs magnétiques.

9. Procédé de codage et de décodage de signaux audio-visuels de télévision dans un système de diffusion de signaux audio-visuels selon l'une quelconque des revendications 1 à 8 caractérisé en ce qu'il comprend les étapes suivantes :
a) pour le codage :
— génération d'un signal pilote continu sinusoïdal de fréquence multiple de la demi-fréquence de balayage de ligne ;
— génération d'un train unique de bits marquant le début de chaque image et insertion de ce train dans un des intervalles de suppression de trame de chacune de ces images ;
— génération d'une porteuse et modulation en fréquence de cette porteuse par le signal vidéo ;
— combinaison de cette porteuse modulée en fréquence avec le signal pilote pour générer un signal composite ;
— et génération d'un signal écrêté modulé en durée à partir de ce signal composite.
b) pour le décodage :
— extraction et séparation du signal pilote et du signal vidéo à partir du signal écrit modulé en durée ;
— extraction du train unique de bits à partir du signal vidéo ;
— et régénération de signaux impulsionnels de synchronisations utilisés dans un système de télévision classique.

**Claims**

1. A system for the distribution of audiovisual signals representing television images organized in frames divided into scan lines, using a multiplex wave composed of a sequence of duration modulated pulses adapted to be transcribed onto a track carried by an information carrier ; the audiovisual signals comprising a video signal ; characterized in that it comprises a recording section comprising :

— first circuits (210) for generating a continuous sinusoidal pilot signal of a frequency which is a multiple of the half line scanning frequency ;

— second circuits (211, 200) for generating a single bit sequence and for recording of this sequence within one of the frame blanking intervals of each image of the video signal in a manner to mark the beginning of each of these images :

— third, frequency modulation circuits (205) producing a carrier modulated by the video signal ;

— fourth circuits (206, 208) combining the carrier modulated by the video signal with the continuous sinusoidal pilot signal for generating a composite signal ;

— and fifth circuits (209) for duration modulation and limitation of this composite signal ; and a reading section comprising :

— filtering circuits (302) for extraction of the continuous sinusoidal pilot signal from the read signal ;

— and circuits (316) for regeneration of synchronization pulse signals used in a conventional television system from the extracted pilot signal.

2. System in accordance with claim 1, characterized in that the first circuits generate a sinusoidal signal the frequency of which is equal to an odd multiple of the line scanning half frequency so that the phase of the pilot signal is inverted from one scanning line to the following.

3. System in accordance with claim 1, characterized in that, the video signals being free of standard synchronization signals, it comprises means for recording digital or analog information signals during intervals corresponding to the line returns.

4. System in accordance with claim 1, characterized in that the reading section further comprises a phase locked oscillator (309-312) controlled by the pilot signal and the output frequency of which is used as a reference for the synchronization signal generation circuit (316).

5. System in accordance with claim 4, characterized in that the phase locked oscillator (309-312) has a time constant determined in a manner to render it insensitive to transient alterations of the pilot signal.

6. System in accordance with claim 1, characterized in that the reading section further comprises electro-mechanic or electronic time bases synchronized by the pilot signal.

7. System in accordance with any of claims 1 to 6, characterized in that it comprises means for reading audiovisual recorded signals using optic detectors.

8. System in accordance with any of claims 1 to 6, characterized in that it comprises means for reading audiovisual recorded signals using magnetic detectors.

9. Method of coding and decoding audiovisual television signals in an audiovisual signal distribution system in accordance with any of claims 1 to 8, characterized in that it comprises the following steps :

a) for coding :

— generation of a continuous sinusoidal pilot signal of a frequency which is a multiple of the line scanning half frequency ;

— generation of a single bit sequence marking the beginning of each image and insertion of this sequence into one of the frame blanking intervals of each of these images ;

— generation of a carrier and frequency modulation of this carrier by the video signal ;

— combination of this frequency modulated carrier with the pilot signal for generating a composite signal ;

— and generation of a limited duration modulated signal from this composite signal ;

b) for decoding :

— extraction and separation of the pilot signal and of the video signal from the recorded duration modulated signal ;

— extraction of the single bit sequence from the video signal ;

— and regeneration of synchronization pulse signals used in a conventional television system.

**Ansprüche**

1. System zur Verbreitung von audiovisuellen Signalen, die in Teilbildern, welche in Ablenkzeilen unterteilt sind, organisierte Fernsehbilder darstellen, unter Anwendung einer Multiplexschwingung, die aus einer Reihe von dauermodulierten Impulsen zusammengesetzt ist, die auf eine von einem Informationsträger getragene Spur überschrieben werden können ; wobei die audiovisuellen Signale ein Videosignal enthalten ; dadurch gekennzeichnet, daß es einen Aufzeichnungsabschnitt umfaßt, mit :

— ersten Schaltungen (210) zur Erzeugung eines kontinuierlichen, sinusförmigen Pilotsignals einer Frequenz, die ein Vielfaches der halben Zeilenablenkfrequenz ist ;

— zweiten Schaltungen (211, 200) zur Erzeugung einer einzigen Bitfolge und zur Aufzeichnung dieser Folge in einem der Teilbild-Austastintervalle jedes Bildes des Videosignals, so daß der Anfang jedes dieser Bilder markiert wird ;

— dritten Schaltungen (205) zur Erzeugung eines durch das Videosignal frequenzmodulierten Trägers ;

— vierten Schaltungen (206, 208) zum Kombinieren des durch das Videosignal modulierten Trägers mit dem kontinuierlichen sinusförmigen Pilotsignal zur Erzeugung eines zusammengesetzten Signals ;

— und fünften Schaltungen (209) zur Dauermodulation und Begrenzung dieses zusammengesetzten Signals ;
und einem Leseabschnitt enthält, welcher umfaßt :

— Filterschaltungen (302) zum Ausfiltern des kontinuierlichen sinusförmigen Pilotsignals aus dem ausgelesenen Signal ;

— und Schaltungen (316) zum Regenerieren der impulsförmigen Synchronisationssignale, die in einem herkömmlichen Fernsehsystem verwendet werden, aus dem herausgefilterten Pilotsignal.

2. System nach Anspruch 1, dadurch gekennzeichnet, daß die ersten Schaltungen ein sinusförmiges Signal einer Frequenz erzeugen, die gleich einem ungeradzahligen Vielfachen der halben Zeilenablenkfrequenz ist, so daß die Phase des Pilotsignals von einer Ablenkzeile zur nächsten invertiert wird.

3. System nach Anspruch 1, dadurch gekennzeichnet, daß bei Abwesenheit von genormten Synchronisationssignalen in den Videosignalen Mittel zum Aufzeichnen der digitalen oder analogen Informationssignale während der dem Zeilenrücklauf entsprechenden Intervalle vorgesehen sind.

4. System nach Anspruch 1, dadurch gekennzeichnet, daß der Leseabschnitt ferner einen phasenstarren Oszillator (309-312) umfaßt, der durch das Pilotsignal gesteuert wird und dessen Ausgangsfrequenz als Bezugsgröße für die Schaltungen (316) zur Erzeugung der Synchronisationssignale verwendet wird.

5. System nach Anspruch 4, dadurch gekennzeichnet, daß der phasenstarre Oszillator (309-312) eine derart bestimmte Zeitkonstante aufweist, daß er gegen kurzzeitige Änderungen des Pilotssignals unempfindlich ist.

6. System nach Anspruch 1, dadurch gekennzeichnet, daß der Leseabschnitt ferner elektromechanische oder elektronische Zeitbasen umfaßt, die durch das Pilotsignal synchronisiert sind.

7. System nach einem der Ansprüche 1 bis 7, dadurch gekennzeichnet, daß es Mittel zum Auslesen von aufgezeichneten audiovisuellen Signalen unter Verwendung von optischen Fühlern umfaßt.

8. System nach einem der Ansprüche 1 bis 6, dadurch gekennzeichnet, daß es Mittel zum Auslesen von aufgezeichneten audiovisuellen Signalen unter Anwendung von magnetischen Fühlern umfaßt.

9. Verfahren zum Codieren und Decodieren von audiovisuellen Fernsehsignalen in einem System zur Verbreitung von audiovisuellen Signalen nach einem der Ansprüche 1 bis 8, dadurch gekennzeichnet, daß es folgende Verfahrensstufen enthält :

a) zum Codieren :

— Erzeugung eines kontinuierlichen, sinusförmigen Pilotsignals einer Frequenz, die ein Vielfaches der halben Zeilenablenkfrequenz ist ;

— Erzeugung einer einzigen Bitfolge, die den Anfang jedes Bildes markiert, und Einfügung dieser Folge in eines der Bild-Austastintervalle jedes dieser Bilder ;

— Erzeugung einer Trägerschwingung und Frequenzmodulation derselben durch das Videosignal ;

— Kombinieren dieser frequenzmodulierten Trägerschwingung mit dem Pilotsignal zur Erzeugung eines zusammengesetzten Signals ;

— und Erzeugung eines begrenzten Signals, das durch dieses zusammengesetzte Signal dauermoduliert ist ;

b) zum Decodieren :

— Herauslösen und Trennen des Pilotsignals und des Videosignals aus dem aufgezeichneten, dauermodulierten Signal ;

— Herauslösen der einzigen Bitfolge aus dem Videosignal ;

— und Regenerieren von impulsförmigen Synchronisationssignalen, die in einem herkömmlichen Fernsehsystem verwendet werden.

FIG. 1

FIG. 2

FIG. 3

Fig.4

Fig.5

Fig. 6

$E_1$ — 200 — BN
201 — $E_2$
202
203
204 — $V_G$ — 205 — $S_1$
211 — BN — Bf
206 — $K_1$
207 — $K_2$
208 — 209 — $S_2$
210 — CDS — P

Fig. 7